(19) Europäisches Patentamt
European Patent Office
Office européen des brevets

(11) **EP 2 224 256 A1**

(12) **EUROPEAN PATENT APPLICATION**

(43) Date of publication:
**01.09.2010 Bulletin 2010/35**

(51) Int Cl.:
*G01R 31/28* (2006.01)    *G06F 17/50* (2006.01)

(21) Application number: **09425076.8**

(22) Date of filing: **25.02.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **C.R.F. Società Consortile per Azioni 10043 Orbassano (Torino) (IT)**

(72) Inventors:
• **Abrate, Massimo**
  **10043 Orbassano (IT)**
• **Panizza, Ugo**
  **10043 Orbassano (IT)**

(74) Representative: **Bergadano, Mirko et al**
  **Studio Torta S.r.l.**
  **Via Viotti, 9**
  **10121 Torino (IT)**

(54) **Reliability estimate of an apparatus**

(57)    A computer-assisted method for estimating a statistical stress-dependent model of an apparatus. The statistical stress-dependent model, when implemented by a computer, provides a reliability function of the apparatus according to a mission profile associated with a time plot of one or more environmental and/or electric and/or mechanical stresses adapted to cause failure modes on the apparatus. The estimate of the statistical stress-dependent method includes defining a minimum number of samples of the apparatus on which reliability tests may be carried out in order to generate a series of data which allow the parameters of the statistical stress-dependent model to be determined; carrying out the reliability tests on the apparatus samples for generating the data; and estimating the statistical stress-dependent model parameters according to the data obtained in the reliability tests.

## FIG. 1

Mission-stress profiles →  [ Computer-implementable, statistical stress-dependent model ]  → Apparatus reliability function

2

**Description**

The present invention relates to the reliability estimate of an apparatus, such as for example an electronic apparatus, to which explicit reference will be made in the following disclosure without therefore loosing in generality.

As known, the processes of developing new apparatuses, specifically electronic apparatuses, include carrying out the so-called methods of validating and qualifying the apparatus itself.

In this case, the methods of validating are defined and carried out by the manufacturer during the step of developing the apparatus in order to check whether the apparatus has a predetermined quality and/or reliability standard or not, while the methods of qualifying are defined by the buyer who ordered the electronic apparatus in order to ascertain whether the apparatus complies with a series of established reliability specifications.

Both the aforesaid method types are essentially based on that no electronic apparatus should fail or have non-conforming operations when carrying out the methods themselves.

In other words, the aforesaid methods typically require the electronic apparatuses to pass a defined sequence of tests.

Although the aforesaid methods, if carried out on a statistically significant number of sample apparatuses, allow to validate and/or qualify the apparatus on one hand, i.e. allow to determine whether the latter is able to withstand the stresses applied during the intended tests, on the other hand they are not able to provide an actual reliability estimate of the apparatus itself. In this case, the aforesaid methods do not allow to determine reliability margins of an electronic apparatus. Therefore, implementing the aforesaid methods does not allow to select an apparatus according to the reliability thereof.

It is thus the object of the present invention to provide a computer-assisted method for estimating a stress-dependent model which, if computer-implemented, determines a reliability function of an apparatus according to a series of mission profiles comprising stresses suffered from the apparatus itself.

According to the present invention, a computer-assisted method for estimating a stress-dependent model is thus provided as defined in claim 1 and preferably, but not necessarily, in any one of the claims which directly or indirectly depend on claim 1.

Furthermore, according to the present invention, a computer-implementable method for conducting a reliability comparison of apparatuses serving the same function is provided, as defined in claim 12.

Furthermore, according to the present invention, a computer-implementable method for estimating the warranty servicing costs of the apparatus and/or the extension time of the warranty itself is provided, as defined in claim 13.

Furthermore, according to the present invention, a computer-implementable method for determining a mission profile adapted to the apparatus according to a predetermined lifespan is provided, as defined in claim 14.

Furthermore, according to the present invention, a computer-implementable method for prognosing an apparatus is provided, as defined in claim 15.

Furthermore, according to the present invention, a computer-implementable method for validating and/or qualifying an apparatus is provided, as defined in claim 16.

Finally, according to the present invention, a computer-implementable software product is provided, as defined in claim 17.

The present invention will now be described with reference to the accompanying drawings, which illustrate a non-limitative embodiment thereof, in which:

- figure 1 diagrammatically shows a statistical stress-dependent model providing a reliability function based on a mission profile estimated according to the dictates of the present invention;
- figure 2 shows a flow chart of a series of operations implemented by the method of estimating in order to obtain the statistical information related to the apparatus from which the statistical stress-dependent model shown in figure 1 is derived;
- figure 3 shows a flow chart of the operations implemented by a method of estimating the statistical stress-dependent model depicted in figure 1;
- figure 4 shows an example of a possible statistical function associated with a statistical stress-dependent model of the apparatus;
- figure 5 shows an example of calculating the maximum likelihood function employed in estimating the statistical stress-dependent model depicted in figure 1;
- figure 6 diagrammatically shows a first method for ensuring the convergence of a method of scoring for searching the maximum of a maximum likelihood function provided by the method of estimating the stress-dependent model shown in figure 1;
- figure 7 diagrammatically shows a second method for ensuring the convergence of the method of scoring for searching the maximum of the maximum likelihood function provided by the method of estimating the stress-dependent model shown in figure 1;

- figure 8 shows an example of a confidence interval in a Gaussian probability density distribution; while
- figure 9 shows a computer capable of implementing the method for determining a reliability function according to a mission profile made according to the dictates of the present invention.

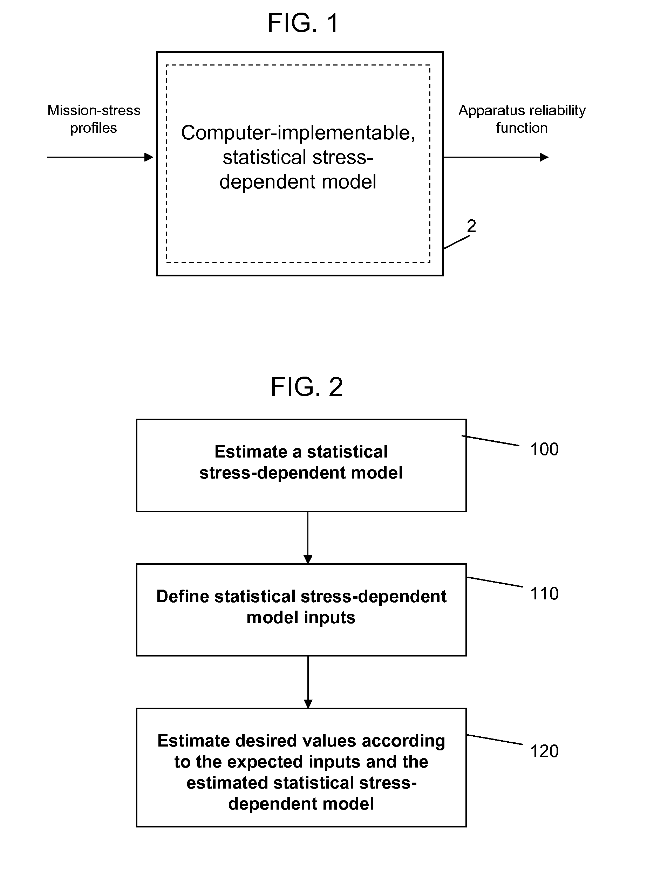

The method provided according to the present invention is essentially based on the principle of estimating a statistical stress-dependent model (shown in figure 1) of an apparatus, preferably but not necessarily electronic, which, when computer-implemented, provides a reliability function of the apparatus according to a mission profile associated with a time plot of one or more environmental and/or electric and/or mechanical stresses adapted to cause failure modes on the apparatus.

Specifically, the method provided according to the present invention essentially includes defining a minimum number of samples of the apparatus on which reliability tests may be carried out in order to generate a series of data which allow to determine statistical stress-dependent model parameters; carry out reliability tests on the apparatus samples for generating the data; and estimate the statistical stress-dependent model parameters according to the data obtained from the tests by means of the computer.

It is worth specifying that in the following description the term "mission profile" means the set of electric and/or environmental and/or mechanical stresses suffered from the apparatus, while the term "reliability curve or function" means a function representing the percentage, on a predetermined total number, of apparatuses expected to fail over time according to a mission profile.

From the above description, it is worth specifying that a series of useful parameters characterizing the apparatus reliability may be advantageously determined once the reliability curve or function has been obtained according to a mission profile. These parameters comprise, for example, "failure probability density over time"; "instantaneous failure probability"; "Mean Time To Failure" of the apparatus, typically indicated by MTTF.

The stress-dependent model estimate is essentially based on a combination of the following methods: a computer-implementable method for solving systems of equations associated with a maximum likelihood estimator by means of a scoring algorithm or genetic algorithm (described in detail below); a computer-implementable method for ensuring the convergence of a method of scoring (described in detail below); a computer-implementable method for estimating a statistical stress-dependent model according to a maximum likelihood function.

On the other hand, the reliability curve or function provided by the estimated stress-dependent model according to a mission profile allows to: estimate a prognostics of the electronic apparatus; carry out a virtual qualification of the apparatus; carry out a virtual validation of the electronic apparatus; define and configure acceptable stress levels for the apparatus according to the generated reliability function.

With reference to figure 2, in order to obtain a series of statistical data/parameters useful for estimating the statistical stress-dependent model, the method of estimating includes the implementation of: a step of estimating a statistical stress-dependent model (block 100); a step of defining the inputs of the statistical stress-dependent model (block 110); and a step of estimating desired values according to the expected inputs and to the estimated statistical stress-dependent model (block 120).

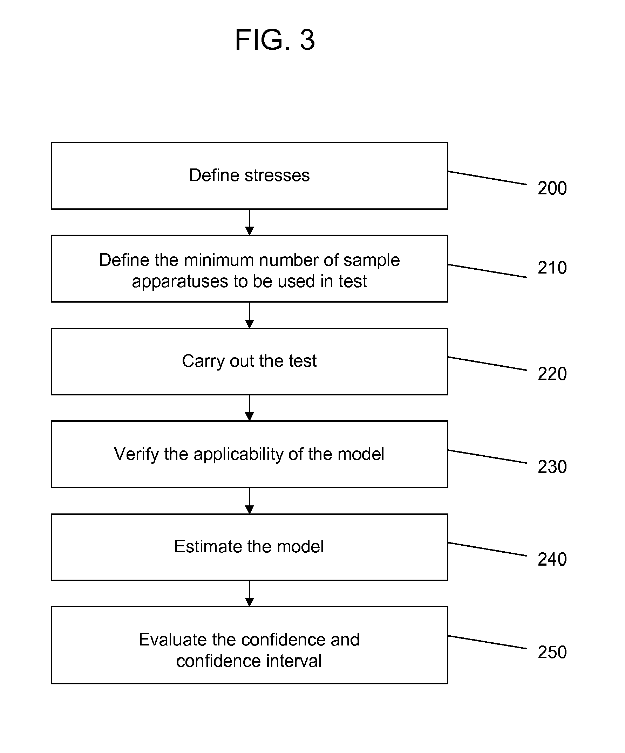

More in detail, with reference to figure 3, the step of estimating a statistical stress-dependent model (block 100) includes, in turn, implementing the following steps: a step of defining the stresses (block 200); a step of estimating a minimum number of sample apparatuses to be employed during laboratory tests (block 210); a step of carrying out tests on the sample apparatuses (block 220); a step of verifying the applicability of an initial statistical model (block 230); and a step of estimating the stress-dependent model (block 240); a step of evaluating the confidence interval and the confidence of the apparatus (block 250).

In detail, the stresses defining the mission profile are defined (block 200) according to: a series of failure parameters correlated to the type of environment in which the apparatus should operate and/or a series of past failure parameters correlated to verified failure types in common circuit parts, i.e. included in known apparatuses and employed in the apparatus under examination; a series of failure parameters obtained by means of so-called 20HALTs (High Accelerated Life Tests). From the above description, it is worth emphasizing that carrying out a HALT allows to highlight the most likely failure modes. HALTs may be preferably, but not necessarily carried out as described in the text entitled "HALT Guideline" published by "Qualmark Corporation", for example.

Estimating the minimum number of samples to be tested (block 210) initially consists in establishing an initial statistical model with which a main distribution is associated. The initial statistical model is established according to the following parameters: the expected failure modes of the apparatus under examination, the stresses expected in the previous step and the type of apparatus under examination.

In detail, the initial statistical model may be established according to the apparatus use field. In this case, the initial statistical model may correspond to any one of the following known statistical models: Normal, Exponential, Weibull, Lognormal, Smallest Extreme Value, Gamma, Chi-Square, Poisson or Binomial.

Estimating the minimum number of samples further includes defining the parameters related to the main distribution of the initial statistical model according to an "expected" statistical curve or function. In this case, the "expected" statistical curve or function corresponds to the plot of a main distribution of the initial statistical model obtainable according to the determined stresses and/or according to a series of values associated with the assumed stress levels.

Estimating the minimum number of samples includes a simulation during which the computer generates, according to the predetermined stresses and the initial statistical model, a number n of random numbers corresponding to the minimum number of sample apparatuses usable in laboratory tests (described in detail below). The number n of random numbers is based on the main distribution of the initial statistical model, in which each number is associated with a sample electronic apparatus which will be tested. The generation of the sample apparatus numbers may be obtained by implementing statistical functions and mathematical calculation computer programs. By way of example, the generation of sample apparatus numbers may be obtained by means of the WBLRND function included in the "Matlab" mathematical program. The WBLRND function is able to provide n numbers generated in accordance with Weibull distribution and according to input parameters.

Alternatively, the numbers n of the sample apparatuses to be employed in laboratory tests may be obtained by implementing the "Monte Carlo" method by means of a computer. Such a method is described, for example, in the book entitled "Methods for Statistical Analysis of Reliability and Life Data", written by Nancy R. Mann, Ray E. Schafer and Nozer D. Singpurwalla, and published by John Wiley & sons Inc. (1974), and is employed for obtaining estimates through appropriate simulations. Furthermore, the method is based on an algorithm which generates a series of reciprocally correlated numbers, which follow the probability distribution associated with a phenomenon to be investigated.

The obtained time point sequence is used to estimate the parameters of the statistical stress-dependent model. Specifically, the obtained parameters must be similar to assumed distribution parameters, the stress and the corresponding stress levels being equal.

During the simulation, the method further includes calculating a reliability function and the corresponding confidence intervals for a given confidence according to the complete initial statistical stress model of the parameters based on the simulated test.

Finally, the simulation includes evaluating the acceptability of the obtained confidence intervals. If the confidence intervals are deemed acceptable, then n is the number of minimum samples of sample apparatuses which will be employed in tests.

If the confidence intervals are not acceptable, then n is increased and the simulation is repeated.

If the confidence intervals are deemed acceptable, instead, but the number n of samples is too high, then the simulation is repeated with a number n lower than the previous number n, in order to check whether the confidence intervals are still acceptable with a lower number of samples.

Once the stresses to be considered with the statistical stress-dependent model and the minimum number of samples have been defined, the test which may be carried out on the n sample apparatuses in order to estimate the parameters defining the statistical stress-dependent model may be defined.

In detail, the test is defined according to the following conditions:

- the number of sample apparatuses to be tested must correspond to the number n determined as described above;
- the considered mission profile must contain all the selected stresses; the mission profile related to each considered stress must be time-variant, preferably but not necessarily of non-cyclic type;
- the apparatuses under test must operate under conditions similar to the typical operating conditions thereof;
- the apparatuses under test must be controlled to timely identify the arising of non-conforming operating manners;
- the mission profile stresses must have high values, but not higher than the predetermined maximum thresholds; these thresholds may be established, for example, in a step of designing;
- the time plot of the stress levels associated with the stresses provided in the mission profiles must be similar to the level of stress suffered from the apparatus during its operation;
- the test must continue until either all, or at least most of, the sample apparatuses are malfunctioning and/or have operating modes not corresponding to non-conforming conditions.

The time plot may correspond, for example, to the time plot of the stress levels expected in validation or qualification tests to which the apparatus should be subjected. Such a stress level configuration of the mission profiles employed in tests advantageously allows to carry out both the test of estimating the reliability model and the tests of qualifying and validating the apparatus for all the tests having mission profiles containing common stresses.

The qualification and validation tests carried out in sequence will be stricter than the parallel execution thereof, if required by the reference standard.

The timely determination of the arising of non-conforming operations reduces the confidence interval of the result, by reducing the time measurement uncertainty, while the simultaneous presence of the stresses during the test allows to increase the accelerating factor thereof without reaching the limit values of each stress.

The applicability check of the initial statistical model, also named "fitting operation", includes implementing the following steps: analyzing the sample apparatus failures determined during the tests; separating the failures according to the failure mode; applying the fitting method to the initial statistical model for each failure mode.

In detail, the apparatuses which during the test had a failure or a non-compliant operation must be subjected to a specific analysis during which the cause of the malfunction is identified. Thereby the sample apparatuses are thus split according to the failure/malfunction mode.

At this point, the representativeness of the data obtained in the tests and belonging to the same failure mode is verified according to the suggested statistical model.

For example, if the initial statistical model corresponds to the statistical Weibull model, a fitting method corresponding to the Mann-Scheuer-Fertig method may be implemented either in the analytical form for a number of samples higher than ten, or in the tabulated form for a number of samples either lower than or equal to ten. Furthermore, if the initial statistical model corresponds to the statistical Weibull model, a graphic method may be implemented as described, for example, in "Statistical Models and methods for lifetime data" J.F. Lawless, published by John Wiley & sons.

It is worth specifying that at least one analytical method for verifying the representativeness (data fitting) and a graphic method based on probability papers are normally associated with each distribution commonly used in statistics.

The graphic methods related to the most common distributions are described, for example, in "Applied life Data Analysis" Wayne Nelson, published by John Wiley & sons Inc. (1982), while the analytical methods are quoted, for example, in "Methods for Statistical Analysis of Reliability and Life Data" Nancy R. Mann, Ray E. Schafer and Nozer D. Singpurwalla, published by John Wiley & sons Inc. (1974).

The stress-dependent model estimate further includes implementing a maximum likelihood method described in "Applied life Data Analysis" Wayne Nelson, published by John Wiley & sons Inc. (1982).

Specifically, the statistical stress-dependent model may essentially comprise the initial statistical model combined with a cumulative failure model and a GLL (General Log Linear) model.

In detail, the cumulative failure model may correspond, for example, to the cumulative model described in "Accelerated Testing statistical model, test plans and Data Analyses" Wayne Nelson, published by John Wiley & sons Inc. (1990).

On the other hand, the GLL model may correspond to the model described in "Accelerated Life Testing Reference", ReliaSoft Publishing, Rev. 2007.

The GLL model preferably requires a conversion of the levels of stresses associated with the stresses contained in the mission profiles.

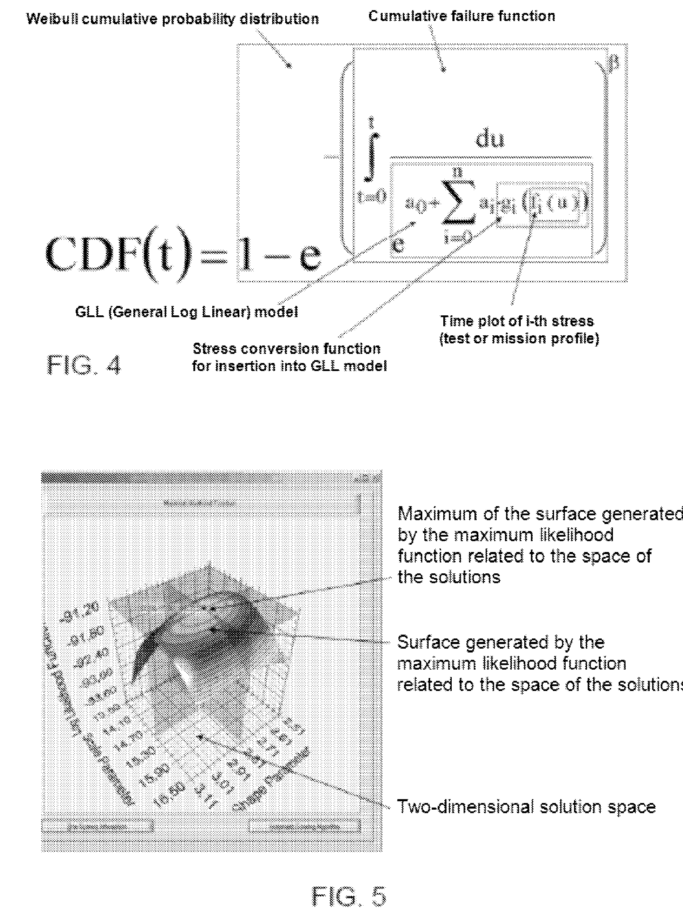

An example related to the cumulative Weibull distribution is shown in Figure 4, in which the various models mentioned above are quoted. A similar approach is used for concatenating models in other distributions.

For example, considering function f(t) as time plot of the stress of a considered mission profile, such a function may be inserted into the GLL model by means of a g(t) transformation.

The criteria for defining the g(t) transformations of the f(t) functions are described, for example, in "Accelerated Life Testing Reference", ReliaSoft Publishing, Rev. 2007, and may be summarized in the concept of making a part of the GLL model related to the considered stress equal to the characteristic function of the stress, except for the unknown parameters.

For example, the g(t) conversion function for the mission profile stresses associated with temperature may be g(t)=1/f(t); the g(t) conversion function for the stresses associated with on/off operations may be g(t)=f(t); the g(t) conversion function for the stresses associated with humidity may be g(t)=1/f(t); the g(t) conversion function for the stresses associated with supply voltage may be g(t)=ln(f(t)); the g(t) conversion function for the stresses associated with random vibrations may be g(t)=ln(f(t)); the g(t) conversion function for the stresses associated with sinusoidal vibrations may be g(t)=ln(f(t)); the g(t) conversion function for the stresses associated with heat shocks may be g(t)=1/f(t); the g(t) conversion function for the stresses associated with stress frequency may be g(t)=ln(f(t)).

More in detail, the function related to the time plot of the "temperature" stress may be defined, for example, by the following Arrhenius equation:

$$t = A^{(\frac{Ea}{kT})}$$

where A is a constant, Ea is the activation energy, k is the Boltzmann constant, t is the failure time and T corresponds to the absolute temperature.

The g(t) function is defined according to the previous equation in order to make part of the GLL model corresponding to the time plot of the "temperature" stress equal to the aforesaid Arrhenius equation.

The part of the GLL model corresponding to the "temperature" stress thus becomes:

$$GLL = e^{a_0 + \sum_{i=1}^{n} g_1(f_1(t)) + \ldots \frac{a}{T} + \ldots g_n(f_n(t)).} = \ldots \cdot e^{\frac{a}{T}} \cdot \ldots \Rightarrow a = \ln(A) \cdot \frac{Ea}{k}$$

An approach of the above-described type for the temperature stress may be applied to any other stress type in a completely similar manner.

More in detail, the probability density function is defined as the cumulative probability function derivative.

The model related to the probability density distribution in the Weibull case is quoted in the following equation:

$$PDF(t) = \frac{dCDF(t)}{dt} = \frac{\beta \cdot \left( \int_{t=0}^{t} \frac{du}{e^{a_0 + \sum_{i=0}^{n} a_i \cdot g_i(f_i(u))}} \right)^{\beta-1} \cdot e^{-\left( \int_{t=0}^{t} \frac{du}{e^{a_0 + \sum_{i=0}^{n} a_i g_i(f_i(u))}} \right)^{\beta}}}{e^{a_0 + \sum_{i=0}^{n} a_i \cdot g_i(f_i(u))}}$$

The instantaneous failure function results from the ratio of the probability density distribution and the one complement of the cumulative probability distribution (reliability function).

In the case of Weibull distribution, for example, the following equation expresses the instantaneous failure probability function:

$$\lambda(t) = \frac{PDF(t)}{1 - CDF(t)} = \frac{\beta \cdot \left( \int_{t=0}^{t} \frac{du}{e^{a_0 + \sum_{i=0}^{n} a_i \cdot g_i(f_i(u))}} \right)^{\beta-1}}{e^{a_0 + \sum_{i=0}^{n} a_i \cdot g_i(f_i(u))}}$$

From the above description, it is worth specifying that the unknown parameters are introduced by the GLL model and, in the Weibull case, they are $\beta$ and $a_i$.

In this case, the unknown parameters $\beta$ and $a_i$ are generally expressed by some parameters of the statistical model, in addition to those introduced by the GLL model. Furthermore, it is worth specifying that some parameters of the statistical stress-dependent model are replaced by the GLL model, and in the Weibull case, a scale parameter is eliminated.

In order to use the maximum likelihood estimator in estimating the stress-dependent model, it is convenient to define the maximum likelihood function by means of the following equation:

$$L(a_0, a_1, \ldots, a_n) = \prod_{j=1}^{n} PDF(t_j, a_0, a_1, \ldots, a_n) \cdot \prod_{z=1}^{m} \left( 1 - CDF(t_z, a_0, a_1, \ldots, a_n) \right)$$

where n is the number of failures occurred during the tests and m is the number of extractions made, related to equipments excluded from the tests but without failures.

In the Weibull case, the previous equation is expressed by means of the following equation:

$$L(\beta, a_0, a_1, ..., a_n) = \prod_{j=1}^{n} PDF(t_j, \beta, a_0, a_1, ..., a_n) \cdot \prod_{z=1}^{m} \left(1 - CDF(t_z, \beta, a_0, a_1, ..., a_n)\right) =$$

$$= \prod_{j=1}^{0} \frac{\beta \cdot \left( \int_{t=0}^{t_j} \frac{du}{e^{a_0 + \sum_{i=0}^{n} a_i \cdot g_i(f_i(u))}} \right)^{\beta-1} \cdot e^{-\left( \int_{t=0}^{t_j} \frac{du}{e^{a_0 + \sum_{i=0}^{n} a_i \cdot g_i(f_i(u))}} \right)^{\beta}}}{e^{a_0 + \sum_{i=0}^{n} a_i \cdot g_i(f_i(u))}} \cdot \prod_{z=1}^{m} e^{-\left( \int_{t=0}^{t_z} \frac{du}{e^{a_0 + \sum_{i=0}^{n} a_i \cdot g_i(f_i(u))}} \right)^{\beta}}$$

In order to avoid the terms product, it is convenient to use the maximum likelihood equation expressed by the logarithm of the previous equation, so as to transform the products into summations according to the following equation:

$$LogL(a_0, a_1, ..., a_n) = \sum_{j=1}^{n} Ln\left(PDF(t_j, a_0, a_1, ..., a_n)\right) + \sum_{z=1}^{m} Ln(1 - CDF(t_z, a_0, a_1, ..., a_n))$$

Instead, the following equation represents the logarithm of the maximum likelihood function applied to the Weibull distribution case:

$$LogL(t, \beta, a_0, a_1, ..., a_n) = \sum_{j=1}^{o} Ln\left(PDF(t_j, \beta, a_0, a_1, ..., a_n)\right) + \sum_{z=1}^{m} Ln(1 - CDF(t_z, \beta, a_0, a_1, ..., a_n)) =$$

$$= \sum_{j=1}^{n} ln\left( \frac{\beta \cdot \left( \int_{t=0}^{t_j} \frac{du}{e^{a_0 + \sum_{i=0}^{n} a_i \cdot g_i(f_i(u))}} \right)^{\beta-1}}{e^{a_0 + \sum_{i=0}^{n} a_i \cdot g_i(f_i(t_j))}} - e^{-\left( \int_{t=0}^{t_j} \frac{du}{e^{a_0 + \sum_{i=0}^{n} a_i \cdot g_i(f_i(u))}} \right)^{\beta}} \right) - \sum_{z=1}^{m} \left( \int_{t=0}^{t_z} \frac{du}{e^{a_0 + \sum_{i=0}^{n} a_i \cdot g_i(f_i(u))}} \right)^{\beta}$$

In order to estimate the stress-dependent model parameters, the above-described logarithmic maximum likelihood function requires to be maximized.

Specifically, the maximization of the logarithmic maximum likelihood function for determining the stress-dependent model parameters may be carried out, for example, by computer-implementing the following methods:

a first method corresponding to the Newton-Raphson Method (Method of scoring) described in "Applied life Data Analysis" Wayne Nelson, published by John Wiley & sons Inc. (1982); while a second method includes the use of genetic algorithms (described in detail below).

In detail, in case of maximum likelihood functions, the Newton-Raphson method may be advantageously applied to two unknown parameters ($\theta_1$, $\theta_2$). An example could be the simple two-parameter estimate of the Weibull distribution.

More in detail, the Newton-Raphson method is essentially based on the maximum likelihood logarithmic function being satisfactorily approximated by a quadratic function.

With reference to the example shown in figure 5, the quadratic function centered on a pair of unknown parameters ($\theta_{i,1}$, $\theta_{i,2}$) is calculated using a Taylor series cut off at the second power:

$$LogL(\vartheta_1,\vartheta_2) = LogL(\hat{\vartheta}_{i,1},\hat{\vartheta}_{i,2}) + \left(\frac{dLogL(\vartheta_1,\vartheta_2)}{d\vartheta_1}\right)_{\substack{\vartheta_1=\hat{\vartheta}_{i,1}\\\vartheta_2=\hat{\vartheta}_{i,2}}}\Delta\hat{\vartheta}_{i,1} + \left(\frac{dLogL(\vartheta_1,\vartheta_2)}{d\vartheta_2}\right)_{\substack{\vartheta_1=\hat{\vartheta}_{i,1}\\\vartheta_2=\hat{\vartheta}_{i,2}}}\Delta\hat{\vartheta}_{i,2} +$$

$$+\frac{1}{2}\left(\frac{d^2LogL(\vartheta_1,\vartheta_2)}{d^2\vartheta_1}\right)_{\substack{\vartheta_1=\hat{\vartheta}_{i,1}\\\vartheta_2=\hat{\vartheta}_{i,2}}}\Delta\hat{\vartheta}_{i,1}^2 + \frac{1}{2}\left(\frac{d^2LogL(\vartheta_1,\vartheta_2)}{d^2\vartheta_2}\right)_{\substack{\vartheta_1=\hat{\vartheta}_{i,1}\\\vartheta_2=\hat{\vartheta}_{i,2}}}\Delta\hat{\vartheta}_{i,2}^2 + \left(\frac{d^2LogL(\vartheta_1,\vartheta_2)}{d\vartheta_1 d\vartheta_2}\right)_{\substack{\vartheta_1=\hat{\vartheta}_{i,1}\\\vartheta_2=\hat{\vartheta}_{i,2}}}$$

$$\Delta\hat{\vartheta}_{i,1}\Delta\hat{\vartheta}_{i,2} + .....$$

The point in which the Taylor series is calculated is either the previously estimated maximum of the maximum likelihood function, or the point where the maximum is supposed to be.

The maximum likelihood method is applied to the approximation of the logarithmic maximum likelihood function (Taylor series), thus the first derivatives are calculated and set to zero to solve the correlated system. In this case, the system may be solved and the maximum point may be calculated.

The Taylor series being an approximation of the maximum likelihood function, the more distant is the maximum from the point in which the series was calculated, the more the result is imprecise. Therefore, the method requires to be repeated on the last calculated maximum.

The Newton-Raphson method continues until the difference between the value of the maximum likelihood function approximated by the Taylor series calculated for the values of two maximums obtained from consecutive estimates is lower than a user-defined precision value.

If the new solution generates a maximum likelihood function value lower than the value related to the previous solution, and thus a deviation from the maximum, the following are sequentially applied: a method of searching for the solution along the direction defined by the straight line joining the last two solutions; and a method of searching for the direction and sense of movement about the penultimate solution.

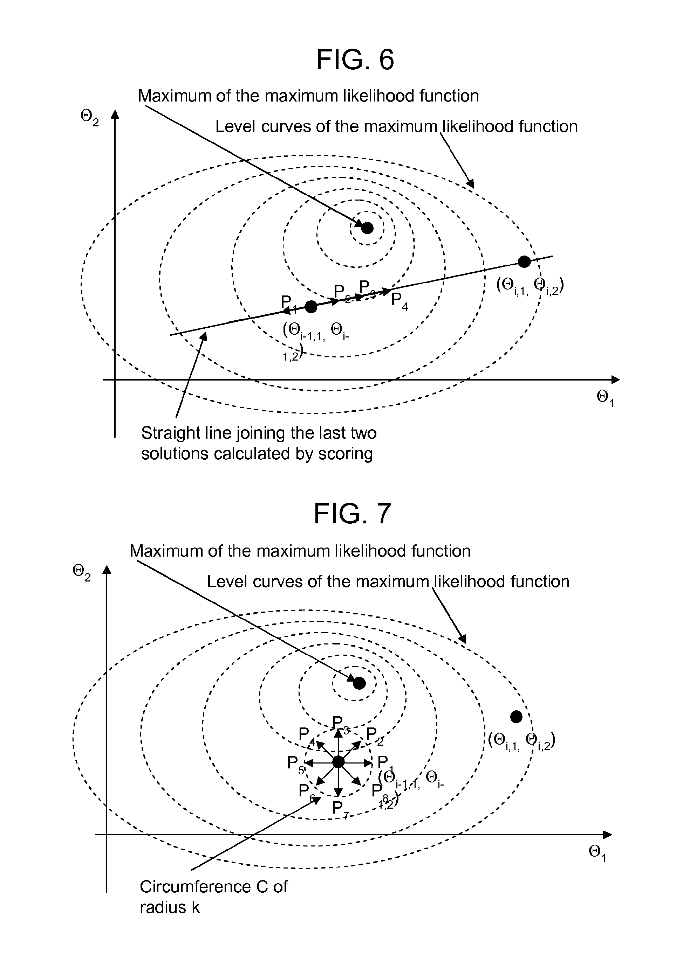

Specifically, figure 6 shows the method of searching for the solution along the direction defined by the straight line joining the last two solutions. In detail, figure 6 shows how the first method of searching for the maximum of the maximum likelihood function operates when the method of scoring does not converge.

Considering the space generated by the two variables under examination deemed orthogonal as the space of the solutions, the first method consists in obtaining the equation of the straight line joining the last two solutions ($\Theta_{i-1,1}$, $\Theta_{i-1,2}$ and $\Theta_{i,1}$, $\Theta_{i,2}$) found in the space of the solutions. The last solution, the i-th, generates a maximum likelihood function value lower than the one generated by the previous solution: the i-1-th.

The distance between the two considered solutions (k) is calculated, the distance is divided by a user-defined constant (a constant of ten is assumed in figure 6).

The two solutions which are obtained by deviating from the i-1-th point along the direction of the straight line joining the last two solutions found by the method of scoring and in the two opposite senses of a distance k ($P_1$ and $P_2$ in figure 6) are considered as new solutions.

The following cases may occur once the two new solutions ($P_1$ and $P_2$) have been found.

In a first case, both solutions ($P_1$ and $P_2$) generate a maximum likelihood function value lower than that related to the i-1-the solution. In this case, the method passes to the method of searching for the direction and sense of movement about the penultimate solution.

On the other hand, in a second case either one or both of the two solutions ($P_1$ and $P_2$) generate a maximum likelihood function value higher than that related to the i-1-the solution: in such a case the method continues.

At this point, which solution (either $P_1$ or $P_2$) generates a higher maximum likelihood function value ($P_2$, in the example) is defined, and the method continues to move along the same direction and sense of the best solution. The next solution $P_3$ is thus calculated, of distance k with respect to the previous solution ($P_2$ in the example), and whether the maximum likelihood function value is better than that calculated by the previous solution is verified. In the negative case, the previous solution is considered ($P_2$, in the example) as the new point for continuing the interactive method of scoring. In the affirmative case, a new solution $P_4$ is generated to be compared with the previous $P_3$ and the check made between $P_1/P_2$ ($P_2$, in the example) and $P_3$, in this case between $P_3$ and $P_4$, is repeated.

The search ends when the new solution $P_i$ generates a maximum likelihood function value lower than that corresponding to the previous solution $P_{i-1}$; in this case, the solution $P_{i-1}$ is considered as the new point for continuing with the interactive method of scoring.

More in detail, the search for the direction and sense of movement about the penultimate solution includes that if the method of searching for the solution along the direction defined by the straight line joining the last two solutions found by the method of Scoring ($\Theta_{i-1,1}$, $\Theta_{i-1,2\,e}$ $\Theta_{i,1}$, $\Theta_{i,2}$) fails, then the method of searching for the direction and sense of movement about the penultimate solution is applied.

In this case, similarly to the previous method, the distance value k is calculated in the example shown in figure 7. Such a value will define the circumference (C) about the point in the space of the solutions related to the solution $\Theta_{i-1,1}$, $\Theta_{i-1,2}$; the solution $\Theta_{i,1}$, $\Theta_{i,2}$ is only used to define k.

n solutions are thus defined (n is defined by the user) on the circumference of radius k centered on the solution $\Theta_{i,1}$, $\Theta_{i,2}$.

Thus, the following operating ways are possible:

- a first way provides for all n solutions ($P_1$, $P_2$, ..., $P_n$) being calculated and the one having a value corresponding to the highest maximum likelihood value is selected ($P_3$ in the example shown in figure 7), the selected solution represents the next working point of the method of scoring; and
- a second way provides for the method starting from a random solution from the suggested n solutions and the subsequent solutions are calculated either anticlockwise or clockwise (chosen by the user) until the first solution providing a maximum likelihood function value higher than that related to $\Theta_{i-1,1}$, $\Theta_{i-1,2}$ is found (in the example in figure 7, the solution is $P_2$ when starting from $P_1$ anticlockwise).

On the other hand, the genetic algorithm may be computer-implemented when estimating the stress-dependent model to solve the maximum likelihood functions with more than two unknown parameters.

The genetic algorithm is based on generating a series of solutions (chromosomes), the parameters (genes) of which may be mixed together according to two types of operators. A first operator type corresponds to a crossover and provides for some solutions mixing their genes to generate new solutions.

The second type corresponds to the mutation. In this case, the genes of a solution are changed to generate a new solution.

The new generated solutions are compared with the previous solutions and, if more reliable (according to their quality, expressed by the logarithm of the maximum likelihood function), replace the previous solutions.

The genetic algorithm ends when the reliability of the solutions differs by a value expressed by the user.

The genetic algorithm is based on the following basic settings:

- twenty solutions are simultaneously considered (the number of solutions may be modified);
- a reliability value is assigned to each solution, defined as the maximum likelihood function value;
- a value indicating the probability that the solution itself is considered for a crossover is associated with each solution, according to the reliability value (high reliability solutions are more likely to be selected).

The genetic algorithm is based on the following cycle. Firstly, two solutions are selected according to a random choice weighed on the probabilities of crossover of each solution; it is randomly decided if the two considered solutions must cross over; if the two solutions must cross over, then two new solutions are generated by applying the crossover operator to the two selected solutions; it is randomly decided if the two new solutions must mutate; if the two new solutions must mutate, then a mutation operator is applied; the reliability of the two new solutions is evaluated; if the two new solutions are better than the previous ones, then they replace them, the replacement is applied even if only one of the two new solutions is better, and in this case the previous worst solution is discarded; if the replacement occurs, the new probabilities of fusing on the modified list of the twenty solutions are calculated; the algorithm termination criterion is verified, if the result is negative the algorithm is repeated, otherwise the method ends and the final solution will correspond to that with the highest reliability value of the twenty existing solutions.

The termination criterion of the genetic algorithm operates by comparing the reliability values of all o-m solutions (where m is selected by the user), and if the reliability values of at least o-m solutions are lower than a tolerance value defined by the user, then the genetic algorithm ends.

In order to understand how the operators operate within the genetic algorithm, it is worth defining the dimensional space n of the solutions (where n is the number of genes existing in each solution).

If there are n parameters, the space of the solutions consists of the base formed by n vectors, where each vector has one as a parameter value and all the others are zeros, so that the n vectors are reciprocally orthonormal. The set of versors representing i), the base of the space of the solutions may be, for example, as follows:

$$\{(1,0,...,0)_1,(0,1,...,0)_2,...(0,0,...,1)_n\}$$

Each point in the space of the solutions is a solution of the parameters. The initial solutions are randomly chosen within such a space.

The crossover operator randomly operates on first, second, third and fourth operators.

The first crossover operator operates according to the following equation

$$\{a_{f,1}, a_{f,2}, ..., a_{f,n}\} = \{a_{p,11}, a_{p1,2}, ..., a_{p1,n}\} + \text{Ratio}\{a_{p2,1} - a_{p1,1}, a_{p2,2} - a_{p1,2}, ..., a_{p2,n} - a_{p1,n}\}$$

where Ratio corresponds to a random number from -1 to 2 and is randomly chosen, $a_f$ are parameters of the new solution and $a_p$ are parameters of the solutions selected for the crossover.

Such a setting allows to exit from the set of points comprised in the sub-space of the solutions, given by the negate of the intersection of the two polytopes defined considering that each face is represented by the equation $xi=+a_i$ with $a_i$ equal to one of the parameters. The set of the faces of the polytope related to a solution is constructed starting from the following vectors m):

$$\{(\pm a_1, 0, ..., 0), (0, \pm a_2, ..., 0), ...(0, 0, ..., \pm a_n)\}$$

In the example of Weibull distribution, parameter $\beta$ may not be negative, thus the value of Ratio associated thereto is chosen from 0 to 2 and the sign is assigned so that the result of the operation is positive. The following equation represents the first crossover operator in the Weibull distribution example, with unknown parameters, Ratio as a random number from -1 to 2, Ratio $\beta$ as a random number from 0 to 2, $a_f$ or $\beta_f$ as the parameters of the new solution, and ap or $\beta_p$ as the parameters of the solutions selected for the crossover:

$$\{b_f, a_{f,1}, a_{f,2}, ..., a_{f,n}\} = \{b_{p1}, a_{p,11}, a_{p1,2}, ..., a_{p1,n}\} + \text{Ratio}_\beta \{|b_{p2} - b_{p1}|, 0, 0, ..., 0\} +$$
$$+ \text{Ratio}\{0, a_{p2,1} - a_{p1,1}, a_{p2,2} - a_{p1,2}, ..., a_{p2,n} - a_{p1,n}\}$$

The second crossover operator is the extension to the n dimensions of the method analyzed in case of scoring, named "Search for the solution along the direction defined by the straight line joining the last two solutions".

The new solutions derive from the following equation:

$$\{a_{f,1}, a_{f,2}, ..., a_{f,n}\} = \{a_{p,11}, a_{p1,2}, ..., a_{p1,n}\} + (-1)^s \frac{m}{z} \{|a_{p2,1} - a_{p1,1}|, |a_{p2,2} - a_{p1,2}|, ..., |a_{p2,n} - a_{p1,n}|\}$$

where z is a generally user-defined number of ten, m is a selected vector, $a_f$ are the parameters of the new solution, and $a_p$ are the parameters of the solutions selected for the crossover.

The sequence according to which the operator operates is as follows: a) the two new solutions defined by m=1 and s=1 and 0 are calculated; b) which of the two solutions is verified as the most reliable and the method proceeds with the value of s related to such a solution; c) the solution is calculated as equal to the parameter m=i+1 (the first i is equal to 1); d) which solution is verified as the most reliable between that with m=i and m=i+1.

At this point, if the solution with m=i is better than that with m=i+1, then the algorithm ends and the new solution is that calculated with m=i. If instead the solution calculated with m=i+1 is the best, then i is increased by one unit and the procedure is repeated from step c).

For example, in the case of a Weibull distribution, the equation related to the second crossover operator is as follows:

$$\left\{b_f, a_{f,1}, a_{f,2}, ..., a_{f,n}\right\} = \left\{b_{p1}, a_{p1,1}, a_{p1,2}, ..., a_{p1,n}\right\} + (-1)^s \frac{m}{z} \cdot$$

$$\cdot \left\{\left|b_{p2} - b_{p1}\right|, \left|a_{p2,1} - a_{p1,1}\right|, \left|a_{p2,2} - a_{p1,2}\right|, ..., \left|a_{p2,n} - a_{p1,n}\right|\right\}$$

where z is a number defined by the user generally of ten, m is the selected vector, $a_f$ or $\beta_f$ are the parameters of the new solution, while $a_p$ or $\beta_p$ are the parameters of the solutions selected for the crossover.

The third crossover operator is the extension to the n dimensions of the method analyzed in the case of Scoring named "Search for the direction and sense of movement about the penultimate solution".

In the case of n dimensions, the value of k is defined as the Euclidean norm of the vector centered in the first solution $(a_{p1,1}, a_{p1,2}, ..., a_{p1,n})$ and which falls in the second solution $(a_{p2,1}, a_{p2,2}, ..., a_{p2,n})$ :

$$\left\|(x_1, x_2, ..., x_n)\right\| = \sqrt{x_1^2 + x_2^2 + ... + x_n^2} = \sqrt{(a_{p1,0} - a_{p2,0})_1^2 + (a_{p1,1} - a_{p2,1})_2^2 + ... + (a_{p1,n} - a_{p2,n})_n^2}$$

In order to simplify the disclosure, a new space of the solutions A' is defined as the space obtained from the previous A by means of the following spatial translation:

$$\left\{a'_1, a'_2, ..., a'_n\right\} = \left\{a_1 - a_{p1,1}, a_1 - a_{p1,2}, ..., a_n - a_{p1,n}\right\}$$

The origin of the space of the solutions A' coincides with the first solution selected for the crossover in the space of the solutions A.

If the number of parameters is higher than three, the hypercube is considered, which is the multidimensional analog of square and cube: it generalizes the concepts of point, segment, square and cube into the highest dimension, belonging to dimensions 0, 1, 2 and 3 respectively.

If the number of parameters is three, then the cube is considered but the treatment is the same.

The hypercube is defined for n parameters, the vertexes of which are $2^n$ : these are all points having +1 or -1 in all coordinates; for example, the 3-dimensional cube has 8 vertexes, given by the equation p) and the tesseract (4 dimension hypercube) has 16 vertexes:

(1,1,1),(1,1,-1),(1,-1,1),(1,-1,-1),(-1,1,1),(-1,1,-1), (-1,-1,1),(-1,-1,-1)

The versors in the hypercube given from the set shown in equation r) are defined, these versors represent the minimum distance of each maximum dimension face of the hypercube and its centre; the equation of each maximum dimension face is $+x_i$, where i varies from 1 to n.

$$\left\{(\pm 1, 0, ..., 0)_1, (0, \pm 1, ..., 0)_2, ..., (0, 0, ..., \pm 1)_n\right\}$$

The vectors shown in the following equation are defined from the versors:

$$V = \left\{(\pm k, 0, ..., 0)_1, (0, \pm k, ..., 0)_2, ..., (0, 0, ..., \pm k)_n\right\}$$

The reliability of the solutions defined by the set of vectors V is calculated and the three solutions having the highest reliability value (the user may vary this parameter) and the obtained vector are considered, considering every parameter equal to the value of k which generated the maximum reliability of the two values which may be: +k. For example, if there are five unknown parameters and the three vectors with the highest reliability are: {(0,k,0,0,0),(0,0,-k, 0,0),(0,0,0,0,k)} and the set of the vectors which generated the maximum reliability of each of the two tested solutions is {(-k,0,0,0,0), (0,k,0,0,0), (0,0,-k,0,0), (0,0,0,k,0), (0,0,0,0,k)}, then the set of vectors X is considered for the subsequent calculations X={(-k,k,-k,k,k), (0,k,0,0,0), (0,0,-k,0,0), (0,0,0,0,k)}.

The vectors of set S are derived from set X as the first vector of set X and all the possible combinations of the remaining vectors; in the example, set S would be:

$$S=\{ (-k,k,-k,k,k),(0,k,0,0,0),$$
$$(0,0,-k,0,0),(0,0,0,0,k),$$
$$(0,k,-k,0,0),(0,k,0,0,k),$$
$$(0,0,-k,0,k),(0,k,-k,0,k)\}.$$

The new generated solutions are the two most reliable contained in set S.

The fourth crossover operator is determined by means of DOE techniques (Design Of Experiment described in "Understanding Industrial Designed Experiment" Stephen R. Schmidt e Robert G. Launsby, published by Air Academy Press, Rev. (2007)).

The main object of the fourth operator is indeed to use the DOE techniques to find the direction in the space of the solutions along which to move in order to approach the final solution.

Also in this case, the value of k is calculated as seen in the calculation of the third operator and the new space of the solutions is defined with the transformation described in the equation indicated above:

$$\{a'_1, a'_2, ..., a'_n\} = \{a_1 - a_{pl,1}, a_1 - a_{pl,2}, ..., a_n - a_{pl,n}\}$$

An operation could be evaluating all the vertexes, defined as all vectors having -1 or +1 in every dimensional coordinate of the hypercube centered in the origin in n-dimension space of the solutions A', but such an approach would imply analyzing $2^n$ possible solutions.

Therefore, the number of solutions which are analyzed should be reduced, so as to find which coordinates are the most significant for improving the solution, the most suitable DOE method for a screening of this type is the Plackett-Burman method or the Rule of Thumb method by Taguchi, with n being higher than five.

The implemented method is that of Plackett-Burman which includes operating with 8, 12, 16, 20 or 24 solutions, and up to 7, 11, 15, 19 and 23 parameters or dimensions respectively, constructed according to the rules of the method (a positive sign implies a coordinate value +k, while a negative value implies a value -k).

For example, if there are 11 dimensions, the considered solutions are shown in the following table.

| Solution | $a_1$ | $a_2$ | $a_3$ | $a_4$ | $a_5$ | $a_6$ | $a_7$ | $a_8$ | $a_9$ | $a_{10}$ | $a_{11}$ |
|---|---|---|---|---|---|---|---|---|---|---|---|
| 1 | +k | -k | +k | -k | -k | -k | +k | +k | +k | -k | +k |
| 2 | +k | +k | -k | +k | -k | -k | -k | +k | +k | +k | -k |
| 3 | -k | +k | +k | -k | +k | -k | -k | -k | +k | +k | +k |
| 4 | +k | -k | +k | +k | -k | +k | -k | -k | -k | +k | +k |
| 5 | +k | +k | -k | +k | +k | -k | +k | -k | -k | -k | +k |
| 6 | +k | +k | +k | -k | +k | +k | -k | +k | -k | -k | -k |
| 7 | -k | +k | +k | +k | -k | +k | +k | -k | +k | -k | -k |
| 8 | -k | -k | +k | +k | +k | -k | +k | +k | -k | +k | -k |

(continued)

| Solution | $a_1$ | $a_2$ | $a_3$ | $a_4$ | $a_5$ | $a_6$ | $a_7$ | $a_8$ | $a_9$ | $a_{10}$ | $a_{11}$ |
|---|---|---|---|---|---|---|---|---|---|---|---|
| 9 | -k | -k | -k | +k | +k | +k | -k | +k | +k | -k | +k |
| 10 | +k | -k | -k | -k | +k | +k | +k | -k | +k | +k | -k |
| 11 | -k | +k | -k | -k | -k | +k | +k | +k | -k | +k | +k |
| 12 | -k | -k | -k | -k | -k | -k | -k | -k | -k | -k | -k |

Two averages of the reliability function are calculated for each parameter (logarithmic maximum likelihood function), shown in the space of solutions A: the solution related to the cases with positive ks and that for the cases with negative ks of the considered parameter, such an operation is repeated for each parameter. The following table represents an example of the average of the reliability function for each parameter, which average is made on cases with positive k and negative k, in which the last line represents the absolute value of the average difference:

| | $a_1$ | $a_2$ | $a_3$ | $a_4$ | $a_5$ | $a_6$ | $a_7$ | $a_8$ | $a_9$ | $a_{10}$ | $a_{11}$ |
|---|---|---|---|---|---|---|---|---|---|---|---|
| +ks average | -118 | -118 | -116 | -115 | -125 | -119 | -123 | -117 | -111 | -118 | -109 |
| -ks average | -117 | -88 | -121 | -119 | -65 | -119 | -110 | -119 | -131 | -121 | -112 |
| \|Difference\| | 1 | 30 | 5 | 4 | 60 | 0 | 13 | 2 | 20 | 3 | 3 |

Once the averages for each parameter have been calculated, the difference between the calculated average with positive k and that with negative k is carried out, the absolute value of such a difference is considered. The higher absolute value differences represent the parameters with the highest influence in determining the direction to be followed for reaching the maximum.

The set of reciprocally orthogonal vectors corresponding to these parameters is thus defined. In the example of the present invention, in which the vectors are selected using the Plackett-Burman method, the significant parameters are $a_2$, $a_5$, $a_7$ and $a_9$ corresponding to the following vectors:

```
C={ (0,k,0,0,0,0,0,0,0,0,0),
    (0,0,0,0,k,0,0,0,0,0,0),
    (0,0,0,0,0,0,k,0,0,0,0),
    (0,0,0,0,0,0,0,0,-k,0,0)}
```

The sign of each vector of set C is positive if the average of the reliability function of the considered parameter calculated for positive ks is higher than that for negative ks, or otherwise it is negative.

A method of selecting the parameters operates by selecting the first z parameters (z chosen by the user) which generate a higher difference.

The set of solutions S is considered as the set resulting from all the possible combinations of the vectors of set C.

The following equation is an example of the vectors selected to find the best solution.

```
S={ (0,k,0,0,0,0,0,0,0,0,0), (0,0,0,0,k,0,0,0,0,0,0),
```

```
(0,0,0,0,0,0,k,0,0,0,0),(0,0,0,0,0,0,0,0,-k,0,0)

(0,0,k,0,k,0,0,0,0,0,0),(0,0,k,0,0,0,k,0,0,0,0),

(0,0,k,0,0,0,0,0,-k,0,0),(0,0,0,0,k,0,k,0,0,0,0),

(0,0,0,0,k,0,0,0,-k,0,0),(0,0,0,0,0,0,k,0,-k,0,0),

(0,0,k,0,k,0,k,0,0,0,0),(0,0,k,0,k,0,0,0,-k,0,0)

(0,0,k,0,0,0,k,0,-k,0,0),(0,0,0,0,k,0,k,0,-k,0,0),

(0,0,k,0,k,0,k,0,-k,0,0)}}
```

The reliability function of set S is calculated and the best vector is selected, once the best vector has been found, for example in the example (0,0,k,0,k,0,0,0,-k,0,0), the subsequent multiples of the vector are considered, in the example (0,0,mk,0,mk,0,0,0,-mk,0,0) with m=2,3,4,..., the second vector with the best reliability function of set S and the vector with the best reliability function chosen from the multiples of the vector selected from set S are considered as the final solution.

The following procedure is followed for calculating the multiple to be selected: 1) the reliability function of the selected vector is calculated for m=i=1; 2) the reliability function of the vector m=i+1 is calculated; 3) the reliability function related to vector i and i+1 is compared; 4) if the function related to the vector i+1 is higher, then 1 is added to i and the procedure is repeated from step 2; 5) if the reliability function related to the vector i is higher, then it is selected as the final solution and the procedure ends.

Finally, the mutation operator acts on a solution by randomly mutating the coordinates (genes) thereof within the solution space. Such an operator ensures a greater exploration of the space of the solutions and aids in solving the problems deriving from the maximums of the local, logarithmic maximum likelihood functions.

The step of evaluating the confidence interval and the confidence are described below.

Upon the estimate of the above-described statistical stress-dependent model, the computer is able to implement a method for evaluating the reliability function of the apparatus according to the mission profiles comprising the stresses. In order to provide a full result, the confidence interval associated with each point of the reliability curve for the defined confidence requires to be provided.

In order to calculate the confidence interval of the reliability function, the computer implements the following operating steps: 1) calculating the local Fisher matrix applied to the maximum likelihood function; inverting the Fisher matrix; calculating the variance of the reliability function; calculating the confidence interval related to the reliability function; calculating the variance and the confidence interval of every other considered function.

Specifically, the computer determines the local Fisher matrix applied to the maximum likelihood function by calculating the second derivatives of the maximum likelihood function as compared to the various combinations of the parameters of the stress-dependent model calculated for the estimated values of the parameters.

The second derivatives must be calculated for the estimated values of the parameters.

In the example of Weibull distribution, the computer determines the local Fisher matrix expressed by the following equation:

$$\hat{F} = \begin{bmatrix} \dfrac{d^2 \log L(\hat{\beta}, \hat{a}_0, \hat{a}_1, ..., \hat{a}_n)}{d^2\hat{\beta}} & \dfrac{d^2 \log L(\hat{\beta}, \hat{a}_0, \hat{a}_1, ..., \hat{a}_n)}{d\hat{\beta}d\hat{a}_0} & \dfrac{d^2 \log L(\hat{\beta}, \hat{a}_0, \hat{a}_1, ..., \hat{a}_n)}{d\hat{\beta}d\hat{a}_1} & ... & \dfrac{d^2 \log L(\hat{\beta}, \hat{a}_0, \hat{a}_1, ..., \hat{a}_n)}{d\hat{\beta}d\hat{a}_n} \\ \dfrac{d^2 \log L(\hat{\beta}, \hat{a}_0, \hat{a}_1, ..., \hat{a}_n)}{d\hat{a}_0 d\hat{\beta}} & \dfrac{d^2 \log L(\hat{\beta}, \hat{a}_0, \hat{a}_1, ..., \hat{a}_n)}{d^2\hat{a}_0} & \dfrac{d^2 \log L(\hat{\beta}, \hat{a}_0, \hat{a}_1, ..., \hat{a}_n)}{d\hat{a}_0 d\hat{a}_1} & ... & \dfrac{d^2 \log L(\hat{\beta}, \hat{a}_0, \hat{a}_1, ..., \hat{a}_n)}{d\hat{a}_0 d\hat{a}_n} \\ \dfrac{d^2 \log L(\hat{\beta}, \hat{a}_0, \hat{a}_1, ..., \hat{a}_n)}{d\hat{a}_1 d\hat{\beta}} & \dfrac{d^2 \log L(\hat{\beta}, \hat{a}_0, \hat{a}_1, ..., \hat{a}_n)}{d\hat{a}_1 d\hat{a}_0} & \dfrac{d^2 \log L(\hat{\beta}, \hat{a}_0, \hat{a}_1, ..., \hat{a}_n)}{d^2\hat{a}_1} & ... & \dfrac{d^2 \log L(\hat{\beta}, \hat{a}_0, \hat{a}_1, ..., \hat{a}_n)}{d\hat{a}_1 d\hat{a}_n} \\ ... & ... & ... & ... & ... \\ \dfrac{d^2 \log L(\hat{\beta}, \hat{a}_0, \hat{a}_1, ..., \hat{a}_n)}{d\hat{a}_n d\hat{\beta}} & \dfrac{d^2 \log L(\hat{\beta}, \hat{a}_0, \hat{a}_1, ..., \hat{a}_n)}{d\hat{a}_n d\hat{a}_0} & \dfrac{d^2 \log L(\hat{\beta}, \hat{a}_0, \hat{a}_1, ..., \hat{a}_n)}{d\hat{a}_n d\hat{a}_1} & ... & \dfrac{d^2 \log L(\hat{\beta}, \hat{a}_0, \hat{a}_1, ..., \hat{a}_n)}{d^2\hat{a}_n} \end{bmatrix}_{(\hat{\beta}, \hat{a}_0, \hat{a}_1, ..., \hat{a}_n)}$$

In this case, the parameters estimated by the maximum likelihood estimator have a Gaussian probability distribution centered on their estimated value and with a variance equal to that estimated by reversing the local Fisher matrix.

The variance values of the parameters are found on the diagonal of the local Fisher matrix inverse, while the covariance values are in the other positions. In this case, the computer calculates the local Fisher matrix inverse in the case of Weibull distribution, represented by the following equation.

$$\hat{F}^{-1} = \begin{bmatrix} \hat{V}ar(\hat{\beta}) & \hat{C}ov(\hat{\beta}, \hat{a}_0) & \hat{C}ov(\hat{\beta}, \hat{a}_1) & ... & \hat{C}ov(\hat{\beta}, \hat{a}_n) \\ \hat{C}ov(\hat{a}_0, \hat{\beta}) & \hat{V}ar(\hat{a}_0) & \hat{C}ov(\hat{a}_0, \hat{a}_1) & ... & \hat{C}ov(\hat{a}_0, \hat{a}_n) \\ \hat{C}ov(\hat{a}_1, \hat{\beta}) & \hat{C}ov(\hat{a}_1, \hat{a}_0) & \hat{V}ar(\hat{a}_1) & ... & \hat{C}ov(\hat{a}_1, \hat{a}_n) \\ ... & ... & ... & ... & ... \\ \hat{C}ov(\hat{a}_n, \hat{\beta}) & \hat{C}ov(\hat{a}_n, \hat{a}_0) & \hat{C}ov(\hat{a}_n, \hat{a}_1) & ... & \hat{V}ar(\hat{a}_n) \end{bmatrix}_{(\hat{\beta}, \hat{a}_0, \hat{a}_1, ..., \hat{a}_n)}$$

The reliability function and the possible interesting statistics are determined by the computer according to the parameters and still have a Gaussian probability distribution.

The variance of the reliability function and possible interesting statistics of the apparatus may be derived by the computer according to the variances and covariances of the parameters of the statistical stress-dependent model.

If a function u(t,a$_0$, a$_1$,...,a$_n$) depending from the distribution parameters is considered, for example the reliability function, such a function is again distributed as a Gaussian function centered on the value of the function itself and with a variance depending on the variances and covariance of the parameters:

$$u(t, \hat{a}_0, \hat{a}_1, ..., \hat{a}_n) \Rightarrow \hat{V}ar(u) = \left( \frac{du(t, \hat{a}_0, \hat{a}_1, ..., \hat{a}_n)}{db} \right)^2 \hat{V}ar(\hat{a}_0) +$$

$$\sum_{i=1}^{n} \sum_{j=1}^{n} 2 \left( \frac{du(t, \hat{a}_0, \hat{a}_1, ..., \hat{a}_n)}{da_i} \right) \left( \frac{du(t, \hat{a}_0, \hat{a}_1, ..., \hat{a}_n)}{a_j} \right) \hat{C}ov(\hat{a}_i, \hat{a}_j)$$

The previous equation may be used by the computer for any function u(t,a0, a1,...,an).

In the case of Weibull distribution, the previous equation becomes:

$$u\left(t,\hat{\beta},\hat{a}_0,\hat{a}_1,...,\hat{a}_n\right) \Rightarrow V\hat{a}r(u) = \left(\frac{du\left(t,\hat{\beta},\hat{a}_0,\hat{a}_1,...,\hat{a}_n\right)}{db}\right)^2 V\hat{a}r(\hat{\beta}) +$$

$$\sum_i^n 2\left(\frac{du\left(t,\hat{\beta},\hat{a}_0,\hat{a}_1,...,\hat{a}_n\right)}{db}\right)\left(\frac{du\left(t,\hat{\beta},\hat{a}_0,\hat{a}_1,...,\hat{a}_n\right)}{a_i}\right)C\hat{o}v\left(\hat{\beta},\hat{a}_i\right) +$$

$$\sum_{i=1}^n \sum_{j=1}^n 2\left(\frac{du\left(t,\hat{\beta},\hat{a}_0,\hat{a}_1,...,\hat{a}_n\right)}{da_i}\right)\left(\frac{du\left(t,\hat{\beta},\hat{a}_0,\hat{a}_1,...,\hat{a}_n\right)}{a_j}\right)C\hat{o}v\left(\hat{a}_i,\hat{a}_j\right)$$

In the case of Weibull distribution, for calculating the reliability function, the computer assigns the value expressed by the following equation to the function u:

$$u\left(t,\hat{\beta},\hat{a}_0,\hat{a}_1,...,\hat{a}_n\right) = \ln\left(I\left(t,\hat{\beta},\hat{a}_0,\hat{a}_1,...,\hat{a}_n\right)\right)$$

Once the margins (upper and lower) of function u(t,β,a0, a1,...,an) have been calculated for each value t, the corresponding margin of the reliability function in case of Weibull distribution is determined by the computer using the following equation.

$$R\left(t,\hat{\beta},\hat{a}_0,\hat{a}_1,...,\hat{a}_n\right) = e^{-e^{bu(t,\hat{\beta},\hat{a}_0,\hat{a}_1,...\hat{a}_n)}}$$

In the case of Weibull distribution, a similar procedure may be implemented by the computer for the other correlated statistical functions, e.g. the cumulative probability function or the instantaneous failure function.

The erf function related to the Gaussian distribution (of which both the average value and its variance have been calculated) is used to calculate the confidence margins, the user having assigned a confidence value:

$$Confidence = P(\hat{x} - \eta V\hat{a}r(\hat{x}) < x < \hat{x} + \eta V\hat{a}r(\hat{x})) = \frac{1}{V\hat{a}r(\hat{x})\sqrt{2\pi}} \int_{\hat{x}-\eta V\hat{a}r(\hat{x})}^{\hat{x}+\eta V\hat{a}r(\hat{x})} e^{-\frac{1}{2}\left(\frac{x-\hat{x}}{V\hat{a}r(\hat{x})}\right)^2} =$$

$$erf\left(\frac{\eta}{\sqrt{2}}\right)$$

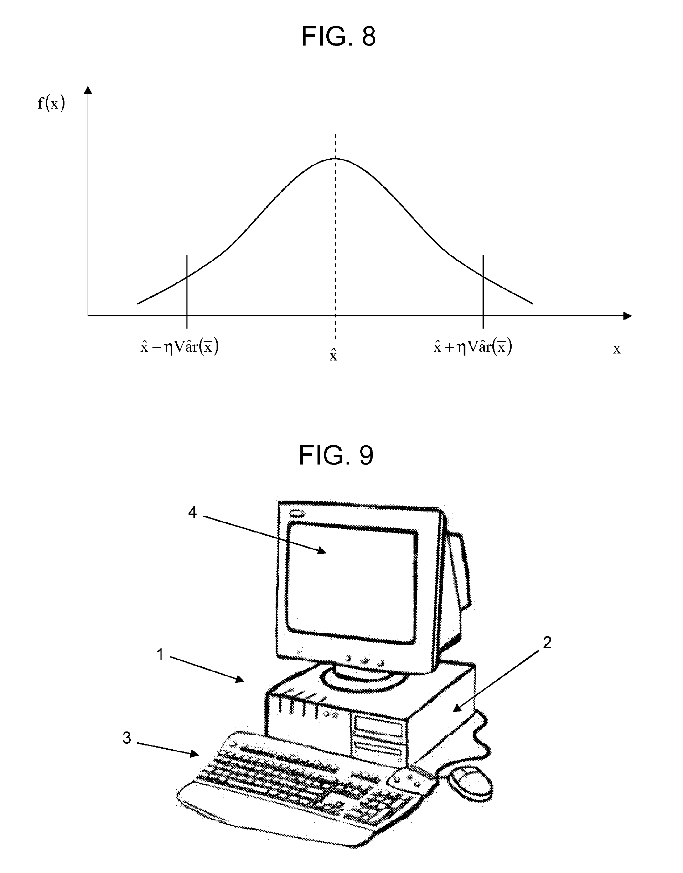

Figure 8 shows an example in which the confidence represents the probability value given by the integral of the Gaussian probability density distribution between the extremes $\hat{x} \pm \eta V\hat{a}r(\overline{x})$.

The suggested method allows to estimate a statistical stress-dependent model of the apparatus under examination, from which the following information may be advantageously derived as described in detail below: virtual validation; virtual qualification; reliability function according to the expected mission profile; reliability function according to the carried out mission profile (prognostics); hardest simultaneous stress conditions for the apparatus.

Specifically, the virtual validation or qualification occurs according to the following steps: verifying the applicability of the model to the validation or qualification tests; constructing stress profiles in accordance with the test profiles required for validation or qualification; evaluating the reliability function obtained for each considered stress profile.

In this case, verifying the applicability of the model to the validation or qualification tests includes verifying that the statistical time variant model, estimated according to the stresses which were deemed representative for the application, is appropriate. For example, for an electronic control unit fitted on the frame, the model may be constructed considering the following stresses: vibrations, temperature, heat shocks and shock frequency.

Therefore, in the example, any other stress required for the qualification or validation tests in addition to those listed may not be considered.

For all tests or test sequence required for validation or qualification, it is necessary to verify whether the existing stresses were considered in estimating the model, and in the negative case, the test or test sequence may not be virtually evaluated.

With regards to the construction of the stress profiles in accordance with the required test profiles for validation or qualification, the test or test sequence generally requires the application of time variant, often cyclic stresses, for example a heat profile could vary when cyclically carrying out the same. It is thus necessary to reformulate the profile to adapt it to the form required by the statistical stress-dependent model thus avoiding information losses.

With regards to the evaluation of the reliability function obtained for each stress profile considered, it is worth specifying that the statistical stress-dependent model generates the reliability function of the apparatus related to the stress profile to be applied for each test or test sequence required for validation or qualification.

By means of the apparatus reliability function related to the considered test or test sequence, the probability of passing the same and thus the probability of the apparatus set may be derived.

If the probability of passing the test by the considered set of apparatuses is deemed acceptable, the test is defined virtually carried out with positive outcome.

Such an approach is repeated for each test or test sequence required for validation or qualification; if all tests or test sequences are virtually passed, then the virtual validation or qualification is deemed carried out with positive outcome.

With regards to the reliability function according to the expected mission profile, the reliability function estimate for an expected mission profile consists in considering, as input for the statistical stress-dependent model, a stress profile reproducing the mission profile probably taken by the device during its operation.

This information allows to know the reliability margins of the apparatus according to its mission profiles and thus even the comparison of apparatuses used for the same function.

If the apparatus may record the levels of the stresses applied thereto during its use, the stresses suffered from the apparatus from the moment of its first activation may be plotted. Therefore, it may be used for estimating the reliability function according to the real evolution of the stresses of the apparatus instead of the hypothetical one.

Such an approach allows to always know the instantaneous failure probability of the apparatus and the percentage of failed apparatuses, in accordance with the real evolution of the stresses suffered from the apparatus; therefore a prognostic thereof.

Finally, if time constant stresses are considered, the reliability function is monotonous decreasing, if a function H(stress) is defined equal to the reliability function calculated for a given time t; it results that H(stress) will be as lower as the harder the stress combination is for the apparatus.

According to the above considerations, the hardest stress combination for the apparatus coincides with the stress values for which the function H(stress) is minimal.

In order to calculate the stress combination which minimizes the H(stress) function, the same above-described procedure employed for finding the estimate of the parameters of the stress-dependent model which maximize the maximum likelihood function may be used.

The various above-described calculation/simulation methods included in the method for estimating the stress-dependent model may each be advantageously implemented by a computer 1 shown in figure 9, provided with a processing unit 2 adapted to implement the above-described operations; a control device 3, such as for example a mouse, or a keyboard adapted to allow a user to enter parameters correlated, for example, to the stresses expected in the mission profiles; and a display device 4, for example a monitor, adapted to graphically display the reliability function of the electronic device under examination to the user.

In addition to the above description, it is worth specifying that the present invention advantageously allows to use the estimated, statistical stress-dependent model to allow a user to carry out a reliability comparison of electronic devices serving the same function.

In this case, a reliability comparison method may be computer-implemented, comprising the following steps: generating for each electronic apparatus to be compared a corresponding reliability function according to a statistical stress-dependent model and a same mission profile; and carrying out the reliability comparison of the apparatuses according to the respective reliability functions. In this case, the reliability comparison method may be designed and configured in the form of a computer product which may be loaded on the memory of a computer for implementing the steps described above when executed.

As disclosed above, the present invention further allows to use the estimated, statistical stress-dependent model described above to advantageously allow a user to estimate the warranty servicing costs of an electronic apparatus and/or the extension time of the warranty itself.

In this case, a method of estimating may be computer-implemented, comprising the following steps: determining a reliability function of the electronic apparatus by means of a statistical stress-dependent model according to a predetermined mission profile; determining the frequency and/or moment in which failures appear according to the reliability function; estimating the cost for warranty servicing and/or warranty extension time of the apparatus according to the frequency and/or moment when the failures will appear. In this case, the method of estimating may be designed and configured in the form of a computer product which may be loaded on the memory of a computer for implementing the steps described above when executed.

As disclosed above, the present invention further allows to use the above-described estimated, statistical stress-dependent model to advantageously allow a user to determine a mission profile suitable for the electronic apparatus according to a predetermined lifespan.

In this case, a method for determining a mission profile suitable for the electronic apparatus may be computer-implemented, comprising the following steps: establishing a lifespan of the electronic apparatus; identifying a mission profile which is inputted into an estimated, statistical stress-dependent model as described above and is adapted to generate a reliability function capable of meeting the predetermined lifespan. In this case, the above-described method for determining a mission profile suitable for the electronic apparatus may be designed and configured in the form of a computer product which may be loaded on the memory of a computer for implementing the steps described above when executed.

As disclosed above, the present invention further allows to use the above-described estimated, statistical stress-dependent model to advantageously allow a user to estimate the instantaneous failure probability of the apparatus and the failure percentage of an electronic apparatus upon its activation and use to the analysis time.

Specifically, a prognostic method may be computer-implemented, comprising the steps of storing the levels of stresses applied to the apparatus during its operation; determining a real mission profile according to the stored stress levels; determining the reliability function by means of the statistical stress-dependent model according to the real mission profile of the apparatus; calculating the instantaneous failure probability of the apparatus and the failure percentage of the electronic apparatus according to the time plot of the applied stresses to the analysis moment.

In this case, the above-described prognostic method may be designed and configured in the form of a computer product which may be loaded on the memory of a computer for implementing the steps described above when executed.

As disclosed above, the present invention further allows to use the above-described estimated, statistical stress-dependent model to advantageously allow a user to virtually validate and/or qualify an electronic apparatus.

Specifically, a method of validating and/or qualifying an electronic apparatus may be computer-implemented, comprising the steps of: establishing the predetermined mission profiles corresponding to mission-test profiles required for the virtual validation and/or qualification; evaluating and/or qualifying the reliability functions obtained according to predetermined mission profiles by computer-implementing the statistical stress-dependent model.

In this case, the above-described method of virtually validating and/or qualifying an electronic apparatus may be designed and configured in the form of a computer product which may be loaded on the memory of a computer for implementing the steps described above when executed.

It is worth adding that the above-described method advantageously allows to carry out the virtual validation or qualification of an electronic apparatus by means of a single combined test of environmental stresses carried out on a statistically significant number of samples, from which the estimate of a statistical stress-dependent model may be derived. Indeed, the obtained model allows to foresee the reliability function of the apparatus according to the stresses which will be applied, even in the presence of time variant stresses or mission profiles.

Indeed, the virtual validation or qualification may be carried out by inputting the stresses exactly corresponding to the stresses expected by the tests to the stress-dependent model associated with the apparatus. The stress-dependent model is thus able to calculate the probability of undergoing a failure as if the test were really carried out, also providing the confidence interval and the confidence thereof.

If the failure probability associated with the test is deemed acceptable, this may be considered virtually passed.

The present invention may advantageously includes that during the reliability tests employed to estimate the stress-dependent model, all the sample apparatuses are subjected "in parallel" to a same mission profile sequence, comprising the stresses with levels and evolutions predetermined by the validation or qualification tests.

A part of the reliability test is thereby carried out, while obtaining the tests required for the validation or qualification of the apparatus. Such a sequential execution of the reliability tests advantageously determines a reduction of both times and costs expected for carrying out the same.

In addition to the opportunity of carrying out a virtual validation or qualification of the electronic device by means of the stress-dependent model, further reliability information may be advantageously derived, such as: the combination of stresses representing the hardest working condition for the electronic apparatus; the reliability function of the apparatus according to its mission profile; the reliability function of the apparatus according to the mission profile actually carried out over time until the considered moment; such a function allows to prognose the apparatus. The model parameter estimate is carried out with the maximum likelihood method, by solving the correlated equations by means of a genetic algorithm specifically conceived for the application.

It is finally apparent that changes and variations may be made to the above-described method without therefore departing from the scope of the invention defined in the appended claims.

**Claims**

1. A computer-assisted method for estimating a statistical stress-dependent model of an apparatus; said statistical stress-dependent model when implemented by a computer, providing a reliability function of the apparatus according to a mission profile associated with a time plot of one or more environmental and/or electric and/or mechanical stresses adapted to cause failure modes on said apparatus;
said method being **characterized in that** said estimate of said statistical stress-dependent model comprises the steps of:

   a) defining a minimum number of samples of said apparatus on which reliability tests may be carried out so as to generate a series of data which allow to determine the parameters of said statistical stress-dependent model;
   b) carrying out said reliability tests on said samples of said apparatus for generating said data;
   c) estimating the parameters of said statistical stress-dependent model according to data obtained in said tests by means of said computer.

2. A method according to claim 1, comprising the step of defining mission profiles comprising the stresses correlated to failure modes expected in said apparatus; defining an initial statistical stress-dependent model according to the type of said apparatus, and/or the failure modes expected in said apparatus, and/or said stresses applicable to said apparatus; said minimum number of samples of said apparatus on which said reliability tests may be carried out being calculated according to the main distribution associated with said initial statistical model.

3. A method according to claim 1 or 2, wherein said step c) comprises the step of establishing a maximum likelihood function according to said statistical parameters correlated to the reliability of said electronic apparatuses, and of estimating the parameters of said statistical stress-dependent model by implementing a maximum likelihood method capable of maximizing said maximum likelihood function.

4. A method according to claim 3, wherein said estimate of said statistical stress-dependent model is carried out by implementing a maximum likelihood method corresponding to the Newton-Raphson method.

5. A method according to claim 3, wherein said estimate of said statistical stress-dependent model is carried out by implementing a maximum likelihood method corresponding to a genetic algorithm.

6. A method according to claim 5, wherein said maximum likelihood method corresponding to a genetic algorithm comprises the steps of: establishing a plurality of solutions associated with respective chromosomes so as to define a list of solutions; assigning a reliability value defined as the value of said maximum likelihood function to each solution of said list; associating a value related to the probability that the solution itself is considered for a crossover, to each solution according to the reliability value.

7. A method according to claim 6, wherein said maximum likelihood method corresponding to a genetic algorithm comprises the steps of: selecting at least two solutions from said list according to a random choice weighed on the probability of crossover of each solution; randomly deciding whether the two considered solutions must cross over; if the two solutions must cross over, generating two new solutions by applying a crossover operator to the selected two solutions; randomly deciding whether the two new solutions must mutate; if the two new solutions must mutate, applying a mutation operator; evaluating the reliability of the two new solutions; selecting the solution existing in said list having the higher reliability value.

8. A method according to any one of the claims from 2 to 7, wherein said initial statistical model is combined to a cumulative failure model and to a GLL model.

9. A method according to any one of the claims from 2 to 8, comprising the step of verifying the applicability of said initial statistical model to the data determined during said reliability tests.

10. A method according to claim 9, wherein said step of verifying the applicability of said predetermined statistical model comprises the steps of analyzing the failures found in said sample apparatuses during said reliability tests; separating the failures by failure mode; and applying a fitting method to said predetermined statistical model for each separated failure.

**11.** A method according to any one of the preceding claims, comprising the step of calculating values correlated to the interval and confidence according to said reliability function, a cumulative probability function and an instantaneous failure function of said apparatus.

**12.** A computer-implemented method for conducting a reliability comparison of apparatuses serving the same function; said method comprising the steps of: generating for each apparatus a corresponding reliability function according to a same mission profile and the statistical stress-dependent model associated with said apparatus according to any one of the claims from 1 to 11; conducting said reliability comparison of said apparatuses according to the respective reliability functions.

**13.** A computer-implemented method for estimating the warranty service costs of said apparatus and/or the warranty extension time of the warranty itself; said method being **characterized in that** it comprises the steps of: determining a reliability function of said apparatus according to a predetermined mission profile and the statistical stress-dependent model according to any one of the claims from 1 to 11; determining the frequency and/or moment in which the failures appear according to said reliability function; determining the warranty servicing cost and/or the warranty extension time of said apparatus according to said frequency, and/or the moment in which the failures will appear.

**14.** A computer-implemented method for determining a mission profile suitable for said apparatus according to a predetermined lifespan; said method comprising the steps of: defining a lifespan of said apparatus; identifying a mission profile which, when inputted into the statistical stress-dependent model according to any one of the claims from 1 to 11, generates a reliability function capable of meeting said predetermined lifespan.

**15.** A computer-implemented method for estimating the instantaneous failure probability of an apparatus and the percentage of failed apparatuses upon its activation and the stresses suffered from it to the given analysis time moment; said method comprising the steps of: storing the levels of the stresses applied to said apparatus during its operation; determining a real mission profile according to the stored stress levels; determining the reliability function according to said real mission profile and the statistical stress-dependent model according to any one of the claims from 1 to 11; calculating the probability of instantaneous failure of said apparatus according to the reliability function.

**16.** A computer-implemented method for virtually validating and/or qualifying an apparatus; said method comprising the step of: defining predetermined mission profiles corresponding to mission-test profiles required for the validation and/or qualification; evaluating and/or qualifying the reliability functions obtained according to said predetermined mission profiles and the statistical stress-dependent model according to any one of the claims from 1 to 11.

**17.** A computer product which may be loaded on a computer and configured so that when executed the computer implements a method according to any one of the preceding claims.

## FIG. 1

Mission-stress profiles → Computer-implementable, statistical stress-dependent model → Apparatus reliability function

2

## FIG. 2

Estimate a statistical stress-dependent model — 100

↓

Define statistical stress-dependent model inputs — 110

↓

Estimate desired values according to the expected inputs and the estimated statistical stress-dependent model — 120

# FIG. 3

| | |
|---|---|
| Define stresses | 200 |
| Define the minimum number of sample apparatuses to be used in test | 210 |
| Carry out the test | 220 |
| Verify the applicability of the model | 230 |
| Estimate the model | 240 |
| Evaluate the confidence and confidence interval | 250 |

Weibull cumulative probability distribution — Cumulative failure function

$$CDF(t)=1-e^{-\left(\int_{0}^{t}\ a_0+\sum_{i=0}^{n}\ a_i\cdot g_i\left(f_{i}\left(u\right)\right)\ du\right)^{\beta}}$$

GLL (General Log Linear) model

Stress conversion function for insertion into GLL model

Time plot of i-th stress (test or mission profile)

FIG. 4

Maximum of the surface generated by the maximum likelihood function related to the space of the solutions

Surface generated by the maximum likelihood function related to the space of the solution:

Two-dimensional solution space

FIG. 5

# FIG. 6

Maximum of the maximum likelihood function

Level curves of the maximum likelihood function

$\Theta_2$

$(\Theta_{i,1}, \Theta_{i,2})$

$P_1$  $P_2$  $P_3$  $P_4$

$(\Theta_{i-1,1}, \Theta_{i-1,2})$

$\Theta_1$

Straight line joining the last two solutions calculated by scoring

# FIG. 7

Maximum of the maximum likelihood function

Level curves of the maximum likelihood function

$\Theta_2$

$(\Theta_{i,1}, \Theta_{i,2})$

$P_3$
$P_4$  $P_2$
$P_5$  $P_1$
$P_6$  $P_8$
$P_7$

$(\Theta_{i-1,1}, \Theta_{i-1,2})$

$\Theta_1$

Circumference C of radius k

# FIG. 8

$$f(x)$$

$$\hat{x} - \eta \, \text{Vâr}(\overline{x}) \qquad \hat{x} \qquad \hat{x} + \eta \, \text{Vâr}(\overline{x}) \qquad x$$

# FIG. 9

EP 2 224 256 A1

Europäisches Patentamt
European Patent Office
Office européen des brevets

**EUROPEAN SEARCH REPORT**

Application Number

EP 09 42 5076

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RELIASOFT CORPORATION: "Reliability Prediction Methods for Electronics Products" RELIABILITY EDGE, vol. 9, no. 1, 2008, page 1,9-19, XP002537429 * section "RDF 2000 Predictive Method" * * section "Arrhenius's Law" * * section "Life Testing Method" * ----- | 1-17 | INV. G01R31/28 G06F17/50 |
| X | CIAPPA ET AL: "Lifetime prediction on the base of mission profiles" MICROELECTRONICS AND RELIABILITY, ELSEVIER SCIENCE LTD, GB, vol. 45, no. 9-11, 1 September 2005 (2005-09-01), pages 1293-1298, XP025375874 ISSN: 0026-2714 [retrieved on 2005-09-01] * page 1293, column 1, paragraph 3 * * page 1295, column 1, paragraph 1 - page 1296, column 1, paragraph 1 * ----- | 1-17 | |
| A | US 2007/032973 A1 (CHIEN WEI-TING K [CN] ET AL) 8 February 2007 (2007-02-08) * paragraph [0023]; figures 1a,1b,2c, 3, 5 * * paragraph [0009] - paragraph [0019] * ----- | 1-17 | TECHNICAL FIELDS SEARCHED (IPC) G01R G06F |
| A | DELAROZEE G: "Introduction to reliability" MICROELECTRONIC ENGINEERING, ELSEVIER PUBLISHERS BV., AMSTERDAM, NL, vol. 49, no. 1-2, 1 November 1999 (1999-11-01), pages 3-10, XP004182047 ISSN: 0167-9317 * the whole document * ----- -/-- | 1-17 | |

The present search report has been drawn up for all claims

| Place of search | Date of completion of the search | Examiner |
|---|---|---|
| Munich | 16 July 2009 | Wellisch, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

26

EP 2 224 256 A1

Europäisches
Patentamt
European
Patent Office
Office européen
des brevets

**EUROPEAN SEARCH REPORT**

Application Number

EP 09 42 5076

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CARBOGNANI F ET AL: "Lifetime prediction and design of reliability tests for high-power devices in automotive applications" IEEE TRANSACTIONS ON DEVICE AND MATERIALS RELIABILITY, IEEE SERVICE CENTER, PISCATAWAY, NJ, US, vol. 3, no. 4, 1 December 2003 (2003-12-01), pages 191-196, XP011106082 ISSN: 1530-4388 * the whole document * ----- | 1-17 | |
| A | MERMET-GUYENNET ET AL: "Revisiting power cycling test for better life-time prediction in traction" MICROELECTRONICS AND RELIABILITY, ELSEVIER SCIENCE LTD, GB, vol. 47, no. 9-11, 20 September 2007 (2007-09-20), pages 1690-1695, XP022261165 ISSN: 0026-2714 * the whole document * ----- | 1-17 | TECHNICAL FIELDS SEARCHED (IPC) |

The present search report has been drawn up for all claims

| Place of search | Date of completion of the search | Examiner |
|---|---|---|
| Munich | 16 July 2009 | Wellisch, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

27

## ANNEX TO THE EUROPEAN SEARCH REPORT
## ON EUROPEAN PATENT APPLICATION NO.

EP 09 42 5076

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2009

| Patent document cited in search report | Publication date | Patent family member(s) | Publication date |
|---|---|---|---|
| US 2007032973 A1 | 08-02-2007 | NONE | |

EPO FORM P0459

For more details about this annex : see Official Journal of the European Patent Office, No. 12/82

## REFERENCES CITED IN THE DESCRIPTION

**Non-patent literature cited in the description**

- **Nancy R. Mann ; Ray E. Schafer ; Nozer D. Singpurwalla.** Methods for Statistical Analysis of Reliability and Life Data. John Wiley & sons Inc, 1974
- **J.F. Lawless.** Statistical Models and methods for lifetime data. John Wiley & sons
- **Wayne Nelson.** Applied life Data Analysis. John Wiley & sons Inc, 1982

- **Wayne Nelson.** Accelerated Testing statistical model, test plans and Data Analyses. John Wiley & sons Inc, 1990
- Accelerated Life Testing Reference. ReliaSoft Publishing, 2007
- **Stephen R. Schmidt ; Robert G. Launsby.** Understanding Industrial Designed Experiment. Air Academy Press, 2007